# FASCICULE DE BREVET EUROPEEN

(11) **EP 1 034 395 B1**
(45) Date de publication et mention de la délivrance du brevet: **03.01.2007**
(21) Numéro de dépôt: 98930851.5
(22) Date de dépôt: 12.06.1998
(51) Int. Cl.: F17C 1/16, B29C 70/44, B29C 70/26, F17C 1/02, F17C 13/12, B60K 15/03

(54) **CONTENEUR, NOTAMMENT POUR RESERVOIR DE GAZ LIQUEFIE SOUS PRESSION, ET SON PROCEDE DE FABRICATION**
BEHÄLTER FÜR FLÜSSIGGAS UNTER DRUCK UND VERFAHREN ZU DESSEN HERSTELLUNG
CONTAINER, IN PARTICULAR FOR PRESSURISED LIQUEFIED GAS, AND METHOD FOR MAKING SAME

(30) Priorité: 13.06.1997 FR 9707324
(43) Date de publication de la demande: 13.09.2000
(73) Titulaire: DJP Organisation, 94410 Saint Maurice (FR)
(72) Inventeur: MATTEI, Jean-Pierre, F-94210 La Varenne Saint Hilaire (FR)
(74) Mandataire: Pontet, Bernard
(86) Numéro de dépôt international: PCT/FR1998/001237
(87) Numéro de publication internationale: WO 1998/057095

(56) Documents cités:
- EP-A- 0 633 422
- BE-A- 442 554
- DE-A- 2 723 515
- US-A- 3 368 708
- US-A- 5 462 193
- US-A- 5 651 474

## Description

La présente invention concerne un conteneur, notamment mais non exclusivement en matériau composite.

Elle s'applique notamment à un réservoir de gaz liquéfié sous pression, et plus particulièrement à un réservoir destiné à recevoir du "GPL", ou autres compositions d'hydrocarbures.

Elle concerne également le procédé de fabrication d'un tel réservoir.

De même, bien que l'invention soit susceptible de nombreuses applications, comme il le sera montré, pour fixer les idées et sauf mention contraire, on se placera dans le cadre de l'application préférée de l'invention, rappelée ci-dessus.

La fonction étanchéité doit tout d'abord être assurée, comme dans tout réservoir de carburant.

En outre, les réservoirs de "GPL" sont soumis à une forte pression, de l'ordre de 20 bars (soit 2 . 10⁶ Pa). Aussi, il est nécessaire d'avoir recours à des matériaux mécaniquement résistants (par exemple de l'acier) et de formes particulièrement étudiées.

Théoriquement, la forme idéale pour supporter des fortes pressions est la sphère. On conçoit cependant que cette forme n'est guère adaptée pour des véhicules automobiles, du fait de l'encombrement qui en résulterait.

Aussi les réservoirs de "GPL" les plus courants sont dotés d'une forme cylindrique et sont placés dans le coffre du véhicule (véhicule de tourisme notamment), voire sur le toit, s'il s'agit de véhicules de type utilitaire. Cette solution n'est pas sans inconvénients, notamment pour les véhicules de tourisme : poids important du réservoir et perte de place.

On a également proposé des formes toriques. Le réservoir peut alors prendre la place de la roue de secours. Outre le problème du poids qui subsiste, l'absence de roue de secours constitue un inconvénient non négligeable.

La solution la plus avantageuse serait naturellement de placer le réservoir de "GPL" dans l'espace naturellement réservé aux réservoirs de carburants plus classiques : essence, gasoil, c'est-à-dire habituellement dans une zone du véhicule proche d'une des ailes arrières. On doit tout d'abord rappeler que ce type de réservoir, en tôle relativement mince, ne supporte que des pressions de l'ordre du bar (10⁵ Pa). D'autre part, l'espace disponible étant restreint, la forme extérieure du réservoir est complexe pour pouvoir y être insérée.

Il s'ensuit que, dans la pratique, ces formes complexes ne sont pas compatibles avec la réalisation de réservoirs de "GPL" sur véhicules automobiles.

Pour d'autres applications, telles que les applications aéronautiques, il serait souhaitable de disposer de réservoirs capables de supporter des pressions élevées et de forme sensiblement "plate". Ces réservoirs pourraient, notamment, être disposés dans les soutes d'un avion. Là encore, la forme plate est incompatible avec une pression élevée régnant à l'intérieur du réservoir, sauf à le munir d'une paroi excessivement épaisse. En tout état de cause, on ne pourra pas réaliser, de façon pratique, des réservoirs de grandes dimensions, ce qui impliquerait des faces principales de grandes surfaces et donc des forces de pression exercées sur ces surfaces de forte valeur.

Comme il vient d'être montré, les dispositifs de l'art connu présentent au moins deux inconvénients majeurs : le poids et l'encombrement.

Ces dernières années ont vu l'émergence de matériaux dits composites, plus légers, mais dont la résistance mécanique reste tout à fait satisfaisante. Il est donc clair que l'utilisation de ces matériaux permettrait de diminuer le poids d'un réservoir.

Dans le cadre de l'invention, on entend plus particulièrement par matériau composite une composition que l'on peut mettre en forme par moulage et dont on sait provoquer le durcissement par polymérisation de l'un au moins de ses constituants, ce dernier étant généralement un liant de résine organique dans lequel sont noyés des éléments de charge et de renforcement, telles des fibres minérales ou organiques.

Cependant, en ce qui concerne les réservoirs soumis à une forte pression intérieure, et c'est le cas des réservoirs de "GPL", il serait nécessaire de les doter d'une paroi très épaisse. En effet, dans cette application, comme il a été indiqué, ces réservoirs doivent supporter une pression de 20 bars (2x10⁶ Pa). En réalité, les marges de sécurité entraînent qu'ils doivent supporter une pression maximale de l'ordre de 80 bars (2×10⁶ Pa).

On pourrait par ailleurs penser cloisonner l'intérieur du réservoir pour renforcer sa résistance mécanique. Il est alors nécessaire de prévoir des cloisons, mais celles-ci sont soumises à des effets de cisaillement. De façon pratique, on ne peut pas non plus obtenir des réservoirs supportant des pressions supérieures à 20 bars (2x10⁶ Pa). En outre, ces dispositions ne permettent pas la réalisation de réservoirs de formes quelconques ou polymorphes.

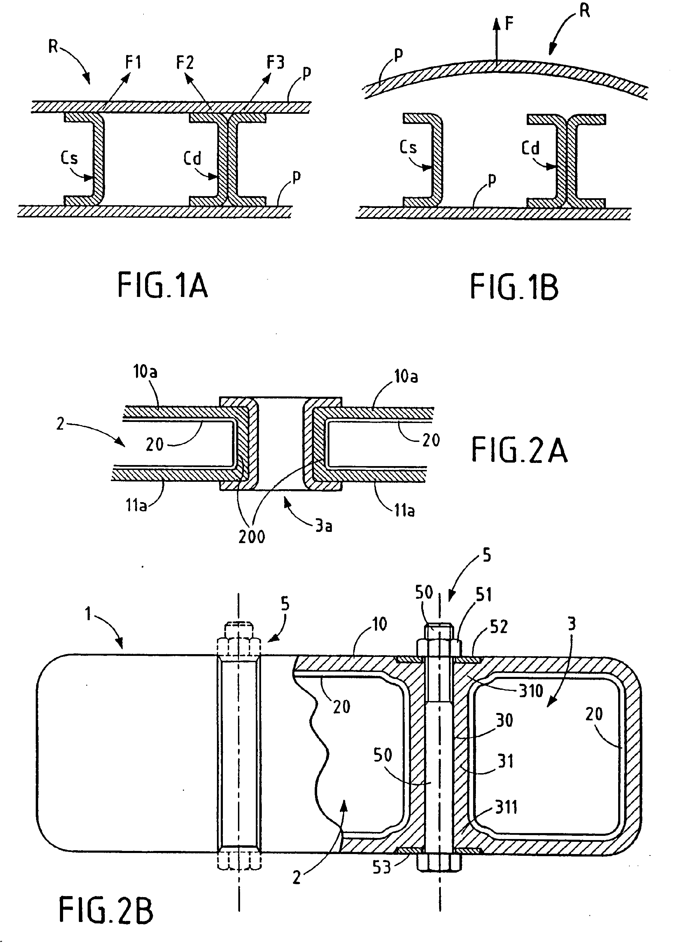

Les figures 1A et 1B, placées en fin de la présente description, illustrent schématiquement cet effet indésirable.

Sur la figure 1A, on a représenté deux types de cloisons réunissant deux faces en vis-à-vis de la paroi p d'un réservoir R : une cloison simple Cs et une cloison double Cd. La section de ces cloisons a la forme d'un "C" ou d'un double "C", respectivement. Les replis des "C" sont collés ou soudés à la paroi p, selon la nature de celle-ci. Dans les deux cas, sous l'effet de la pression interne, la paroi p va être soumise à des forces de cisaillement et de décollement, F₁ pour une cloison simple Cs, et F₂ et F₃ pour une cloison double Cd. Bien que l'on ait représenté des forces sur les seules branches supérieures formes en "C" des cloisons, Cs ou Cd, il va de soit que les branches inférieures sont également soumises à de telles forces, ainsi d'ailleurs que les parties longitudinales. L'intensité des forces, F₁ à F₃, dépend notamment de la longueur des cloisons et de la pression régnant à l'intérieur du réservoir R.

La figure 1B illustre l'état du réservoir R après décollement des arêtes des cloisons Cs et Cd. Cet état peut conduire à une crevaison ou un éclatement du réservoir R, avec des conséquences qui peuvent s'avérer catastrophiques pour certains fluides, En effet, la paroi p (sur sa face supérieure, dans l'exemple illustré sur la figure 1B) n'est plus retenue et elle est soumise à une force de pression importante F, dépendant notamment de sa surface et de la pression régnant dans le réservoir R.

On pourrait également penser renforcer les liaisons mécaniques entre les parois p et les cloisons, Cs et Cd, en boulonnant ou en vissant les branches en contact avec la cloison p, à l'intérieur du réservoir ; cependant cette solution n'est pas satisfaisante, car elle implique un percement de la paroi p et une détérioration de l'étanchéité.

Le document DE 27 23 515 décrit un réservoir de forme sensiblement parallélépipédique dont deux parois opposées sont reliées par des troncs de cônes en prise deux à deux.

Le document BE 442 554 décrit des réservoirs de formes sensiblement toriques renforcés par des entretoises.

L'invention vise à pallier les inconvénients des dispositifs de l'art connus et dont certains viennent d'être rappelés.

Elle vise aussi à répondre aux différents besoins qui se font sentir. Elle permet notamment d'obtenir des réservoirs de formes plates ou, au contraire, très complexes, mais qui ne se limitent pas aux formes sphériques, cylindriques ou similaires de l'art connu.

Pour ce faire, selon un premier mode de réalisation, on prévoit des arbres, axialement creux, ou puits, réunissant les faces principales en vis-à-vis de la paroi du réservoir.

De façon préférentielle, les puits sont répartis régulièrement sur toute la surface du réservoir et on utilise des renforts ou organes de précontrainte sous la forme d'axes boulonnés maintenant un écartement constant entre les deux faces principales de la paroi.

De façon avantageuse, on prévoit un réseau de nervures superficielles de renforcement se croisant au niveau des embouchures des puits.

Selon un second mode de réalisation, les puits sont remplacés par des arbres pleins ou piliers réunissant deux faces principales en vis-à-vis de la paroi, et constituant ainsi des ponts de reprise d'effort.

Comme précédemment, ces ponts de reprise sont répartis régulièrement.

Enfin, dans les deux modes de réalisation, le matériau des puits ou des piliers pleins est avantageusement identique à celui de la paroi, et n'en forme que la continuité.

Les parois et les puits (ou piliers) sont préférentiellement en matériau composite, mais peuvent être réalisés à base d'autres matériaux. Ils peuvent notamment être métalliques.

Si le matériau est un composite, l'ensemble, enceinte fermée et puits ou piliers pleins, peut être réalisé avantageusement en une seule opération de moulage, par exemple selon le procédé décrit dans le brevet français FR-B-2 669 573.

L'invention a donc pour objet un conteneur fermé comportant une paroi délimitant une enceinte interne destinée à recevoir un fluide sous pression, le conteneur ayant une forme déterminée, caractérisé en ce que ladite paroi comporte au moins une paire de première et deuxième faces en vis-à-vis et en ce qu'il est prévu, dans ladite enceinte, au moins un arbre liant de façon continue une zone de la paroi comprise dans ladite première face à une zone de la paroi comprise dans ladite deuxième face, lesdites zones étant en vis-à-vis, l'arbre étant percé d'un orifice axial débouchant de part et d'autre du conteneur sur lesdites première et deuxièmes faces, des organes de précontrainte étant prévus enfilés dans lesdits orifices axiaux.

L'invention a encore pour objet un réservoir de gaz de pétrole liquéfié constitué d'un tel conteneur, notamment en matériau composite.

L'invention a enfin pour objet un procédé de fabrication d'un tel conteneur.

L'invention sera mieux comprise et d'autres caractéristiques et avantages apparaîtront à la lecture de la description qui suit en référence aux figures annexées, parmi lesquelles :
- les figures 1A et 1B illustrent un réservoir selon l'art connu, comportant un cloisonnage interne
- la figure 2A illustre un aspect essentiel de l'invention ;
- la figure 2B est une vue de côté illustrant un exemple de structure de réservoir plan, selon un premier mode de réalisation de l'invention ;
- la figure 2C est une vue de côté, comportant un écorché partiel de ce même réservoir ;
- les figures 2D et 2E illustrent en perspective ce réservoir, la figure 2E comportant un écorché mettant en évidence des détails internes au réservoir ;
- les figures 2F et 2G illustrent des variantes de détails de réalisation selon le premier mode ;
- la figure 3 illustre un exemple de structure de réservoir complexe, selon le premier mode de réalisation de l'invention ;
- les figures 4A et 4B illustrent un exemple de structure de réservoir plan, selon un second mode de réalisation de l'invention, respectivement en coupe et en perspective comportant un écorché ;
- la figure 4C illustre une variante de détail de réalisation selon le second mode ;
- la figure 5 illustre un réservoir à deux compartiments, pour le stockage de deux fluides différents ;
- la figure 6 illustre un réservoir selon l'invention comprenant un compartiment de détente en cas de surpression ;
- la figure 7 illustre un organe de remplissage utilisable dans les deux modes de réalisation principaux de l'invention ;
- et les figures 8 à 10 illustrent trois variantes de réalisation supplémentaires plus particulièrement adaptées à des structures de conteneur en matériau métallique.

Comme il a été précédemment indiqué, on va tout d'abord considérer un conteneur en matériau composite.

On va maintenant décrire un exemple de structure de réservoir plat en matériau composite, selon un premier mode de réalisation de l'invention, par référence aux figures 2A à 2E.

Comme il a été rappelé, un réservoir conforme à l'invention peut être réalisé par mise en oeuvre du procédé de fabrication divulgué par le brevet français FR-B-2 669 573, ou pour le moins par mise en oeuvre des principales étapes de ce procédé, brevet auquel on se reportera avec profit pour une description plus ample du procédé.

Selon une des caractéristiques de ce procédé, on utilise une vessie gonflable interne et des demi-coquilles d'un moule externe. Entre les deux, on place différents matériaux (fibres drapées, etc.) destinés à former ultérieurement la paroi du réservoir, après polymérisation.

Selon une caractéristique essentielle de l'invention on prévoit des arbres en matériau composites répartis régulièrement à l'intérieur du réservoir. Aussi, la vessie du procédé de fabrication rappelée ci-dessus comporte des orifices permettant le passage des extrémités des arbres.

La figure 2A illustre schématiquement cette phase du procédé de fabrication. Sur cette figure 2A, on a représenté une vessie sous la référence 20. Celle-ci est percée d'orifices ou puits, 200, laissant le libre passage à des arbres en matériau composite 3a enserrant une paroi, 10a et 11b, en fibres ou matériau similaire 10a. Dans une phase ultérieure du procédé de fabrication, l'ensemble ainsi formé va être placé entre les demi-coquilles d'un moule (non représenté) et les fibres de la paroi, 10a et 11a, imprégnées de résines polyester ou époxy, ou de matériaux similaires. On procède ensuite à une phase de polymérisation.

Il s'ensuit, comme le montre, par exemple, la figure 2B, que les arbres, référencés désormais 3, vont se fondre dans la paroi définitive, référencée désormais 10 et 11.

Les arbres 3 permettent donc une excellente tenue mécanique, sans possibilité de décollage (contrairement aux cloisons d'un exemple de réalisation selon l'art connu : voir figures 1A et 1B). Comme il le sera montré ci-après, les arbres 3 peuvent être creux (premier mode de réalisation) ou plein (deuxième mode de réalisation).

D'autre part, dans la majorité des cas, et contrairement à l'un des enseignements du procédé de fabrication du brevet français FR-B-2 669 573 précité, on n'élimine pas, en fin de processus de fabrication, la vessie 20. Celle-ci permet d'assurer une étanchéité supplémentaire du réservoir 1.

On va maintenant décrire de façon plus détaillée la structure d'un réservoir plat 1, selon le premier mode de réalisation, par référence aux figures 2B à 2E. Pour simplifier les dessins, on n'a pas représenté sur les figures l'organe de remplissage du réservoir 1. Cet organe sera explicité ultérieurement.

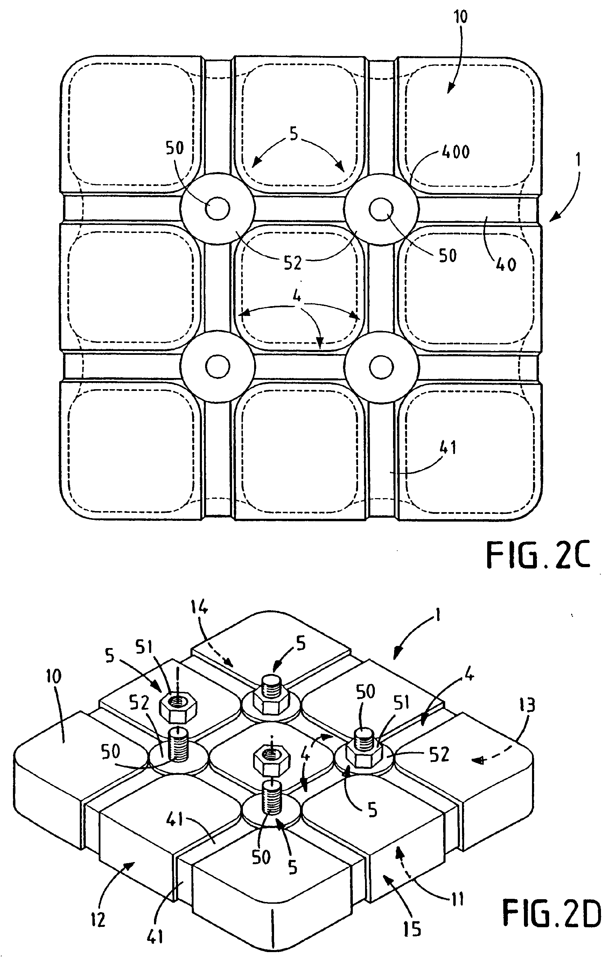

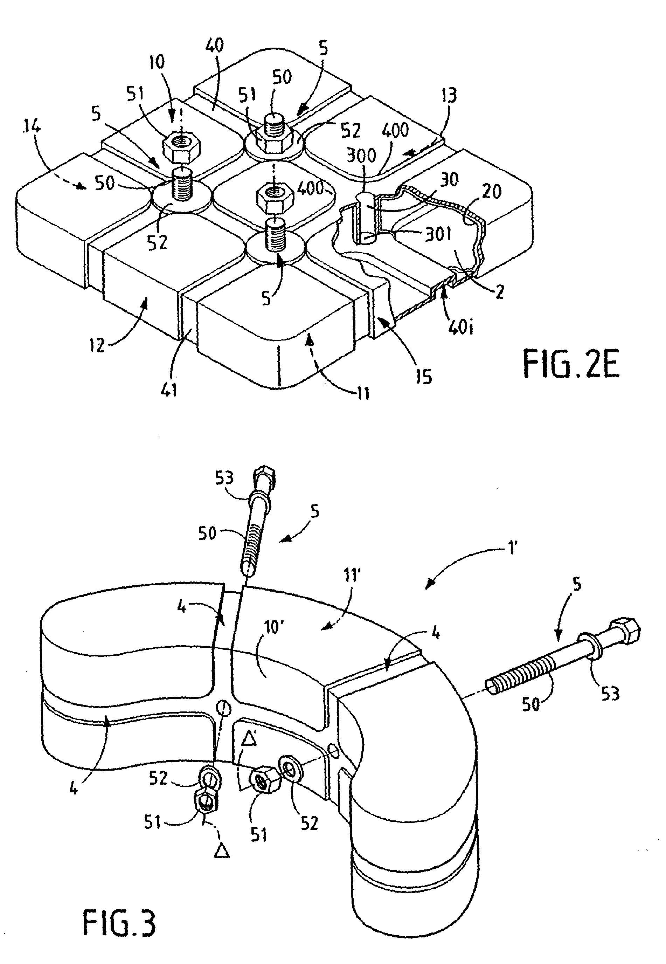

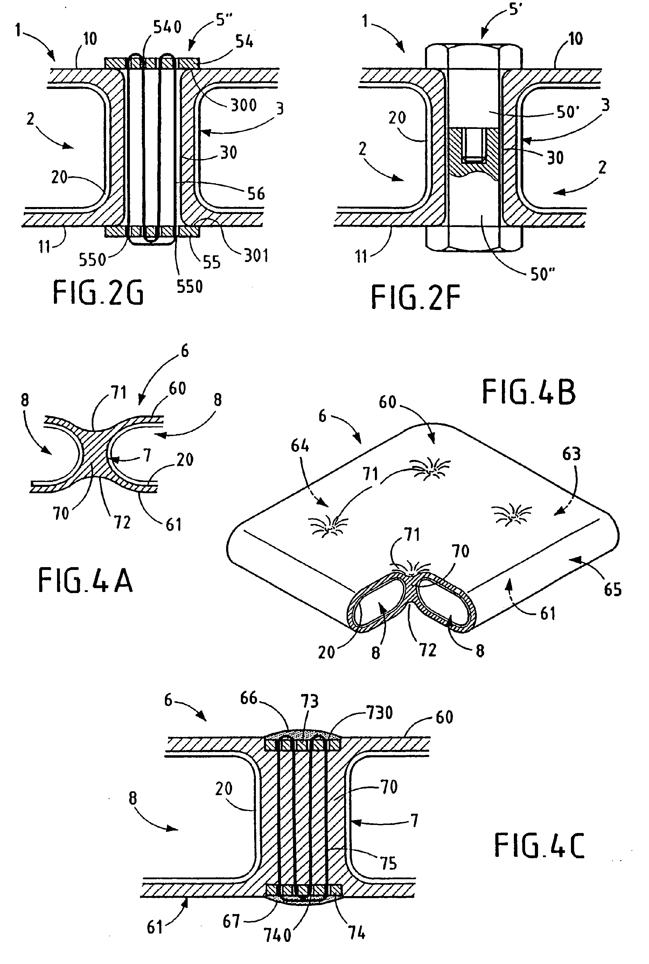

Le réservoir 1 a une forme extérieure plate, c'est-à-dire qu'il est inscriptible dans un parallélépipède rectangle de faible épaisseur par rapport à ses autres dimensions : largeur et longueur. Bien que la paroi du réservoir 1 soit en réalité unique, pour des raisons pratiques, on va la subdiviser ci-après en deux parois principales, 10 et 11, que l'on appellera arbitrairement, supérieure et inférieure, respectivement, et quatre parois latérales, 12 à 15, l'ensemble délimitant une enceinte intérieure fermée 2 (figure 2b). Avantageusement, si les parois principales, 10 et 11, sont substantiellement planes, les jonctions avec les parois latérales se présentent sous la forme de profils arrondis, comme le montre de façon plus particulièrement la figure 2. Les parois principales, 10 et 11, elles-mêmes présentent des coins arrondis, comme le montre de façon plus particulière la figure 2C, pour le moins en ce qui concerne l'intérieur de l'enceinte 2.

Selon une première caractéristique importante de l'invention, on prévoit des arbres 3 axialement creux (orifices 30), que l'on appellera ci-après puits. Avantageusement, ces puits 3 sont dotés d'une section droite circulaire. Ils réunissent les deux parois principales, 10 et 11, du réservoir 1. On doit bien comprendre que la paroi cylindrique 31 des puits 3 est réalisée dans le même matériau composite que les parois, 10 et 11 : elle n'en est que le prolongement. Les zones de jonction, 310 et 311, avec l'intérieur des parois supérieure, 10, et inférieure, 11, sont à variation douce, de façon à permettre un raccordement progressif. Il y a donc continuité complète.

De façon préférentielle, les puits 3 sont équi-répartis dans l'enceinte intérieure 2 du réservoir 1. Dans l'exemple illustré par les figures 2B à 2E, on a représenté quatre puits 3, répartis sur la surface principale selon les lignes et colonnes d'une matrice rectangulaire.

De façon préférentielle également, on prévoit un réseau de nervures 4, réalisées dans l'épaisseur des parois, 10 à 14. De façon plus précise, chaque nervure entoure complètement le réservoir, c'est-à-dire se rebouche sur elle-même. En réalité, il existe deux sous-réseaux de nervures qui se croisent : sur la paroi supérieure 10, et sur la paroi inférieure 11, au niveau des embouchures, 300 et 301, des puits 3. Ces nervures 4 "matérialisent" les "lignes" et les "colonnes" de l'arrangement matriciel de puits 3.

A titre d'exemple, on a représenté sur les figures 2D et 2E, une nervure de "ligne" 41 qui croise une nervure de "colonne" 40 aux embouchures, supérieure 300 et inférieure 301, d'un des puits 3. La figure 2E, qui comporte un écorché, illustre de façon plus précise la partie inférieure de la nervure 40, partie inférieure référencée 40i. On y voit en particulier qu'en section, la nervure est formée dans une épaisseur de paroi qui reste constante.

Comme le montre plus particulièrement l'écorché effectué sur la figure 2E, la jonction entre les parois, 31, des puits, 3, et les parois supérieure, 10, et inférieure, 11, s'effectue en pratique sur les surépaisseurs internes des nervures.

Du seul fait des dispositions qui viennent d'être décrites, on rigidifie les parois et on augmente la tenue mécanique du réservoir 1, ce qui permet aux parois principales (c'est-à-dire de plus grandes surfaces), 10 et 11, de résister à la pression interne, les parois latérales étant moins sollicitées, ne serait-ce que du fait de leurs surfaces réduites.

Cependant, pour augmenter encore la tenue à la pression, on introduit des organes de précontrainte 5 dans les orifices axiaux 30 des puits 3. Le but de ces organes de précontrainte 5, constitués par des tiges filetées ou vis métalliques 50, des écrous 51 et des paires de rondelles, 52 et 53, est de maintenir constant l'écartement entre parois principales, en exerçant une force de compression sur celles-ci, ce qui renforce l'action de maintien des puits 3.

De façon plus précise, pour faciliter la mise en place des rondelles, 52 et 53, les zones de croisement entre nervures comportent des arrondis 400. Cela permet de caler les rondelles, une sur la paroi supérieure, l'autre sur la paroi inférieure, à l'intérieur des nervures. De façon avantageuse, on s'arrange pour que la profondeur des nervures 4 soit sensiblement égale à l'épaisseur des rondelles, 52 et 53. La face externe de celles-ci affleure donc en surface des parois 10 et 11. Les rondelles, 52 et 53, répartissent la force de compression, obtenue par serrage de l'écrou 51 sur la tige filetée 50, sur toute leur surface.

Les rondelles, les écrous et les tiges filetées peuvent être métalliques ou également en matériau composite. Ces organes de précontrainte peuvent être incorporés avant
ou après polymérisation. Avec une tige filetée, des écrous et des rondelles métalliques, on peut réaliser des réservoirs qui peuvent supporter des pressions internes allant jusqu'à 200 bars (20x10⁶ Pa).

En lieu et place des organes de précontrainte représentés sur les figures 2A à 2E, on peut utiliser d'autres organes. A titre d'exemple non limitatif, on a représenté, sur la figure 2F, un ensemble 5' constitué de deux demi-vis, mâle 50' et femelle 50", introduites dans le canal axial 30 du puits 3, de part et d'autre du réservoir 1, et fixées, par vissage, l'une sur l'autre. Là encore, cet organe peut être en métal ou en matériau composite.

Toutes ces dispositions permettent, à la fois, une grande tenue à la pression, accompagnée d'une diminution du poids total, typiquement dans un rapport de quatre à cinq, et la réalisation sous la forme d'une structure plate. On évite, en outre, tout effort de cisaillement aux jonctions entre les parois principales en vis-à-vis, 10 et 11, et la paroi annulaire 31 (évasée aux extrémités) des puits 3 et prise dans la masse (voir figure 2A). De plus, l'utilisation d'organes de précontrainte (figures 2B à 2E : 5, ou figure 2F : 5') accentue cet effet bénéfique.

Un autre exemple d'organe de précontrainte 5" est illustré par la figure 2G. On utilise deux rondelles, une rondelle supérieure 54 et une rondelle inférieure 55, munies d'une pluralité d'orifices, 540 et 550 respectivement. La force de précontrainte est exercée par des fils 56, en carbone ou métalliques, par exemple, enfilés dans les orifices, 540 et 550, et tendus. Ces fils 56 passent dans le canal annulaire 30 des puits 3. Cette disposition permet donc d'exercer une force de précontrainte répartie sur une partie de la surface des rondelles, 54 et 55, s'exerçant sur les embouchures, 300 et 301, des puits 3.

L'invention permet donc un découplage entre la fonction "résistance mécanique" et la fonction "étanchéité" du réservoir, ou de façon plus générale du conteneur.

Le nombre de puits 3 dépend naturellement de l'application précise envisagée, notamment de la pression maximale à supporter et des dimensions des faces principales, 10 et 11, c'est-à-dire de leurs surfaces respectives.

Comme il vient d'être montré, l'invention permet la réalisation de réservoirs de forme plate, bien qu'une telle forme soit connue pour être l'une des moins propices pour la réalisation de réservoirs sous forte pression interne. Cependant, elle permet d'obtenir bien d'autres formes, en particulier des formes complexes ou polymorphes, qui ne se résument pas aux formes sphériques, cylindriques ou similaires des dispositifs de l'art connu.

La figure 3 illustre schématiquement un exemple de réservoir 1' de forme complexe en "haricot".

Les éléments communs aux figures précédentes portent les mêmes références et ils ne seront redécrits qu'en tant que de besoin.

On a supposé que la hauteur du réservoir 1' (verticale sur la figure 3) était plus grande que sa largeur, c'est-à-dire la distance moyenne séparant les deux faces verticales principales en vis-à-vis, 10' et 11'. Dans ce cas, les puits 3 (au nombre de deux dans l'exemple décrit), dont une seule embouchure 300 est visible sur la figure 3, relient ces faces principales verticales. Les canaux sont disposés suivant deux axes, Δ et Δ', qui, d'une part, ne sont pas généralement parallèles, et, d'autre part, sont sensiblement orthogonaux aux plans tangents aux surfaces verticales, 10' et 11', au niveau des embouchures des puits 3 (par exemple 300). On conçoit cependant que cette dernière condition, si elle est souhaitable, n'est pas toujours possible, du fait de la complexité de la forme extérieure du réservoir 1', les surfaces pouvant être gauches. En effet, les plans tangents en "entrée" et "sortie" d'un puits 3 ne sont pas obligatoirement parallèles entre eux. On opère alors un compromis pour se rapprocher au maximum des conditions ci-dessus. Il peut être également possible de déplacer la position des puits 3 pour obtenir des conditions plus favorables et une meilleure répartition des forces de précontrainte et une meilleure résistance à la pression.

Bien que sur la figure 3, on ait représenté, pour des raisons de simplification, des jonctions à angle vif entre les faces supérieure et inférieure du réservoir l' et son contour vertical, il est clair qu'une telle configuration devrait être évitée, autant que faire se peut, et qu'il est intéressant d'adoucir le profil des ces zones de raccordement, pour le moins à l'intérieur de l'enceinte (non visible) de ce réservoir 1'.

Toujours dans le cas d'une forme complexe, telle que celle représentée sur la figure 3, il est clair que l'on peut (dans une variante non représentée) prévoir des puits entre différentes paires de faces de parois en vis-à-vis, par exemple entre les faces supérieure et inférieure du réservoir 1' de la figure 3. Cette disposition renforce la tenue en pression du réservoir. Elle est particulièrement appropriée pour des réservoirs comportant plusieurs paires de faces de paroi de grandes surfaces, faces que l'on peut assimiler à des faces "principales", au même titre que les faces de paroi 10' et 11' (figure 3) ou 10 et 11 (figures 2b à 2e).

On réalise aisément que la forme de réservoir 1' illustrée par la figure 3, ou une forme similaire, est particulièrement adaptée pour être placée dans l'espace normalement occupé, dans un véhicule automobile, par le réservoir classique d'un moteur à essence ou à gasoil.

On va maintenant décrire un second mode de réalisation d'un réservoir de "GPL" selon l'invention, en matériau composite, ou de façon plus générale d'un conteneur fermé dans lequel règne une pression élevée par référence aux figures 4A et 4B.

Pour fixer les idées, le réservoir, ici référencé 6, est doté d'une structure plate, sans que cela réduise en quoi que ce soit la portée de l'invention. Comme dans le cas du premier mode de réalisation, des structures très complexes sont tout à fait réalisables. L'enceinte interne 8 est délimitée par une paroi en réalité unique, mais que l'on a décomposée, comme précédemment pour des raisons pratiques, en deux parois principales, supérieure 60 et inférieure 61, et en parois latérales, 62 à 65.

Selon ce mode de réalisation, les parois principales, supérieure 60 et inférieure 61, sont périodiquement rapprochées et liées entre elles par des arbres ou piliers pleins 7, que l'on peut appeler ponts de reprise d'effort. Les arbres 7 jouent un rôle tout à fait similaire aux puits 3 du premier mode de réalisation.

La figure 4A illustre, en coupe, un de ces piliers 7, dont la région intérieure 70 n'est que le prolongement des parois 60 et 61. De façon avantageuse, on prévoit des dépressions dans ces parois, supérieure 71 et inférieure 72, dans les zones de raccordement. On obtient ainsi des profils à variation douce, tant à l'extérieur, qu'à l'intérieur (enceinte 8) du réservoir 6.

La figure 4B illustre le réservoir 6 en perspective. Un écorché est réalisé au niveau d'un des piliers 7, ce qui permet de voir également l'intérieur du réservoir 6 (enceinte 8), ainsi que la jonction du pilier 7 avec les parois supérieure 60 et inférieure 61.

Le mode de réalisation qui vient d'être décrit en regard des figures 4A et 4B est plus particulièrement adapté à la réalisation de réservoirs recevant des fluides sous des pressions moyennes. En effet, il ne comporte pas de renforts de précontrainte comme dans le cas du premier mode de réalisation : vis 50, écrou 51 et rondelles 52 et 53. Le premier mode de réalisation est donc, de ce fait, le plus approprié pour des pressions élevées.

Cependant, on peut renforcer la tenue en pression, d'une manière similaire à celle décrite en regard de la figure 2G. La figure 4C illustre un exemple d'organe de précontrainte adapté au deuxième mode de réalisation du réservoir selon l'invention, c'est-à-dire mettant en oeuvre des arbres pleins 7. On utilise, comme précédemment, des rondelles (ou "boutons"), 73 et 74, percées d'une pluralité d'orifices, 730 et 740 respectivement. Des fils en carbone ou des fils métalliques, 75, transpercent le matériau 70 des arbres 7, avant ou après polymérisation, et sont enfilés dans les orifices, 730 et 740, et tendus. De ce fait, les boutons, 73 et 74, exercent une pression, sur toute leur surface, sur les parois en surplomb des arbres 7. Les boutons, 73 et 74, peuvent être noyés dans du matériau composite : 66 et 67.

Les boutons, 73 et 74, peuvent être en métal, en matériau composite ou en matériau thermoplastique, selon la pression régnant dans l'enceinte 8 du réservoir 6.

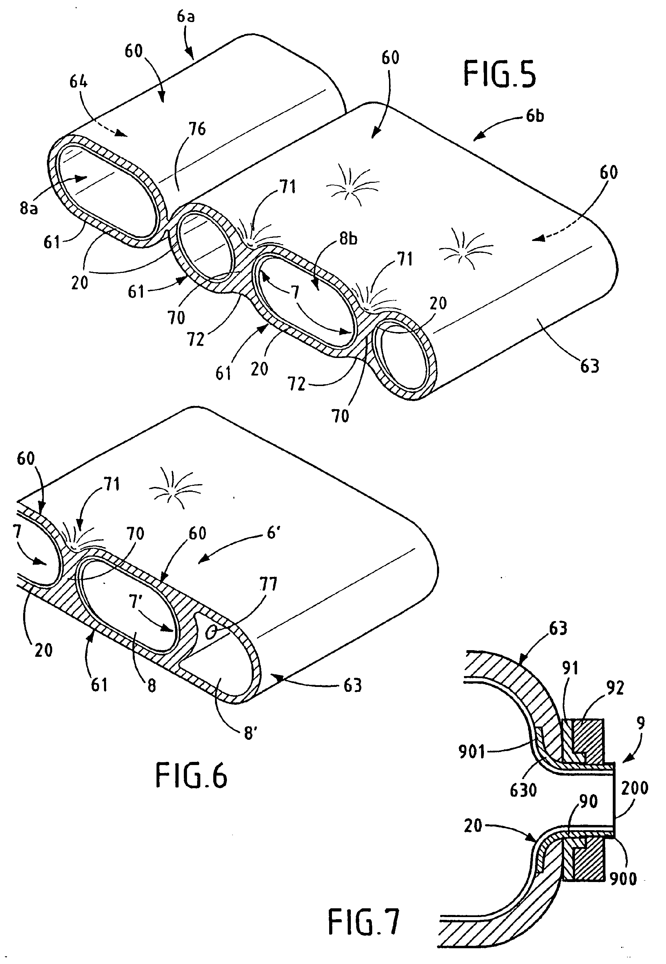

Selon une variante de réalisation supplémentaire, illustrée par la figure 5 (en coupe et perspective), on réalise un réservoir mixte, en ce sens qu'il comporte deux compartiments séparés ou "sous-réservoirs", 6a et 6b, comprenant chacun une enceinte interne, 8a et 8b, respectivement. A titre d'exemple non limitatif, le réservoir 6b, que l'on appellera réservoir principal, est destiné à contenir un fluide sous pression élevée, par exemple du "GPL", et le réservoir 6a, que l'on appellera réservoir auxiliaire, un fluide sous pression faible, par exemple de l'essence.

Cette disposition avantageuse permet de "commuter" entre les deux types de carburant, et notamment de passer sur un mode réserve lors de l'épuisement du carburant principal, c'est-à-dire le "GPL".

Le réservoir principal 6b conserve les dispositions propres à l'invention. De façon plus précise, dans l'exemple illustré par la figure 5, le réservoir 6b a une structure conforme au deuxième mode de réalisation (arbres pleins 7). Il doit cependant être bien entendu que le premier mode de réalisation (c'est-à-dire avec des puits 3 : figures 2B à 2G) convient également. Les éléments communs aux figures précédentes portent les mêmes références et ne seront redécrits qu'en tant que de besoin.

Le réservoir auxiliaire 6a peut être réalisé simplement en remplaçant une "colonne" d'arbres pleins par un sillon continu 76. En d'autres termes, les parois 10 et 11 sont confondues en une paroi unique dans cette zone 76.

Selon une autre variante de réalisation supplémentaire, illustrée par la figure 6 (en coupe et perspective), on réalise un réservoir muni d'un carter dit "d'aisance". Cette variante de réalisation est également commune aux deux modes de réalisation, c'est-à-dire avec arbres creux (puits 3) ou arbres pleins (ponts de reprise 7). Pour fixer les idées, la structure illustrée sur la figure 6 est conforme au second mode de réalisation.

Le réservoir 6' conforme à cette variante de réalisation comporte une enceinte principale 8, tout à fait similaire à l'enceinte principale 8 de la figure 4B, par exemple. Une enceinte auxiliaire 8' de faible capacité est en outre prévue à l'une des extrémités du réservoir 6'. Pour obtenir cette enceinte, il suffit de remplacer une "colonne" d'arbres pleins 7 par une cloison continue 7'. Celle-ci peut être obtenue de façon similaire au sillon 76 séparant les deux réservoirs de la figure 5.

L'enceinte 8' est normalement vide. La cloison 7' comporte en outre un opercule 77 calibré en pression. En cas de surpression du fluide contenu dans l'enceinte 8 et si cette surpression dépasse un seuil préétabli (pression différentielle entre les deux enceintes), l'opercule 77 saute et laisse le libre passage au fluide, ce qui a pour effet de diminuer la surpression, car on augmente le volume de l'enceinte 8 du volume de l'enceinte 8'.

De façon préférentielle, on dépose dans l'enceinte 8' un matériau gélifiant (non représenté). De ce fait, même si la surpression conduit à un éclatement d'une des faces de la paroi du réservoir 6', le fluide se solidifie par l'action du matériau gélifiant, ce qui diminue très fortement les risques d'explosion ou d'inflammation.

Si le fluide est du "GPL", on peut utiliser, par exemple, un produit disponible dans le commerce du type "GA.X/esters/vinylbenzène" vendu par la société "CRAY-VALLEY".

Dans tous les modes de réalisation (et variantes de réalisation) décrits en regard des figures 2B à 6, pour des raisons de simplification des dessins comme il a été indiqué, on a omis de représenter le ou les organe(s) de remplissage du réservoir (ou des réservoirs, principal et auxiliaire pour la variante décrite en regard de la figure 5) .

Un exemple d'un tel organe de remplissage 9 est illustré schématiquement par la figure 7. Il peut être réalisé sous la forme d'un insert conformément à l'enseignement du brevet français FR-B-2 689 206, intitulé "Inserts pour l'équipement de caissons étanches en matériaux composites".

De façon préférentielle, on réalise l'organe de remplissage 9 sur une des faces latérales, c'est-à-dire une face de faible surface. Pour fixer les idées, on a supposé (dans l'exemple décrit) que l'organe de remplissage était situé sur la face 63 de la paroi d'un réservoir 6, conforme au deuxième mode de réalisation.

La vessie 20 comporte un orifice 201 dans la zone où doit être placé l'organe de remplissage 9. On dispose autour de l'extrémité 201 de la vessie 20, un manchon 90, entourant celle-ci. L'extrémité avant 900 de ce manchon est filetée. L'extrémité arrière 901 est évasée et est comprise entre la vessie 20 et la paroi 63. Cette paroi 63, qui comporte également un orifice 630, est bloquée par une contre-pièce 91, elle-même verrouillée par un écrou 92 vissé sur l'extrémité filetée 900 du manchon 90, après la phase de polymérisation.

Selon l'application visée, ces manchon, écrou et contre-pièce peuvent être réalisés en matériau organique ou en métal. Notamment, la contre-pièce 91 est en matière métallique, sauf dans le cas où une tenue au feu est exigée. Dans ce cas, elle est habituellement en matériau organique.

Pour fixer les idées, les matériaux composites peuvent être choisis parmi les structures suivantes : matériaux composites à structure drapée ou préformée, matériaux tressés, imprégnés de résine.

De façon connue, un matériau composite est constitué à base d'éléments de renforcement et d'une matrice.

Dans le cadre de l'invention, le matériau de renforcement peut être choisi parmi les matériaux suivants :
- fibres de carbone ou de verre, qui sont des matériaux légers ;
- "KEVLAR" (marque déposée) qui présente une plus grande résistance aux chocs (par exemple aux projections de pierres dans l'application automobile, si le réservoir est exposé).

La matrice peut être de deux types principaux :
- matrice organique : résine époxyde, résine phénolique, polyester modifié, etc,
- matrice métallique.

Le procédé de fabrication du réservoir, et de façon plus générale d'un conteneur destiné à recevoir des fluides sous pression, bien que pouvant être inspiré du procédé divulgué par le brevet français FR-B-2 699 573 ou d'un procédé analogue, comporte néanmoins des différences significatives. En premier lieu, la vessie 20, habituellement en élastomère, est généralement laissée en place en fin de processus de fabrication, pour assurer une étanchéité complète. En second lieu, elle doit comporter des puits 200 reliant ses faces principales pour laisser passer les arbres 3 ou 7.

En résumé, les principales étapes spécifiques au procédé de fabrication d'un conteneur conforme à l'invention sont les suivantes :
a/ Une étape de création d'une vessie gonflable 20 en matériau élastomère, ayant substantiellement la forme de l'enceinte interne 2 ou 8, du conteneur à fabriquer et des dimensions très peu inférieures aux dimensions de cette enceinte. La vessie 20 doit comporter des puits 200, ouverts aux deux extrémités et reliant deux de ses faces et destinés à recevoir les arbres 3 ou 7.
b/ Une étape de recouvrement de la paroi externe de la vessie 20 ainsi que de remplissage des puits 200 par une association de matériaux de base, sous forme malléable, parmi ceux rappelés ci-dessus. Il peut s'agir d'un drapage à l'aide de fibres et de leur imprégnation par une résine polymérisable.
c/ Une étape d'introduction de cet ensemble dans un moule en deux parties (non représenté) et de gonflage de la vessie 20, de manière à plaquer les matériaux de base contre les parois internes du moule.
d/ Une étape de durcissement, par exemple de polymérisation de manière à obtenir une transformation de ceux-ci en un matériau composite définitif constituant la paroi 10-15 ou 60-64 et les arbres 3 ou 7.

Naturellement, dans le cas du premier mode de réalisation (arbres creux 3), le moule, pour le moins l'une des deux coquilles du moule, doit comporter des excroissances, sous la forme de pivots s'enfonçant dans les puits et laissant libre un espace périphérique correspondant à la paroi 31 des arbres creux 3. L'extrémité libre de ces pivots vient en appui sur la paroi interne de l'autre coquille du moule.

Jusqu'à présent, il a été considéré que le conteneur était réalisé à base matériau composite. Cependant, d'autres matériaux sont utilisables. Il est notamment possible de réaliser le conteneur en métal. Les variantes qui viennent d'être décrites, en regard des figures 2A à 7 sont compatibles avec un tel mode de réalisation.

Si on se reporte de nouveau à la figure 2A, on constate que, selon l'une des caractéristiques fondamentales de l'invention, commune à toutes les variantes de réalisation (figures 2B à 7), la fonction technique principale des arbres ou puits est de retenir deux faces opposées de la paroi du conteneur par effet de "clip" ou de pince, en les empêchant de s'écarter, ce contrairement aux configuration de l'art connu (figures 1A et 1B).

Lorsque le matériau de base est un composite, les arbres ou puits, qu'ils soient creux ou pleins, après polymérisation, ne sont en réalité que la continuité des faces de parois en vis-à-vis.

Si le matériau de base est un métal, sauf à recourir à un procédé de fabrication par fonderie, il apparaît utile de modifier légèrement la structure du conteneur pour qu'elle soit adaptée de façon optimisée à l'utilisation de matériau métallique.

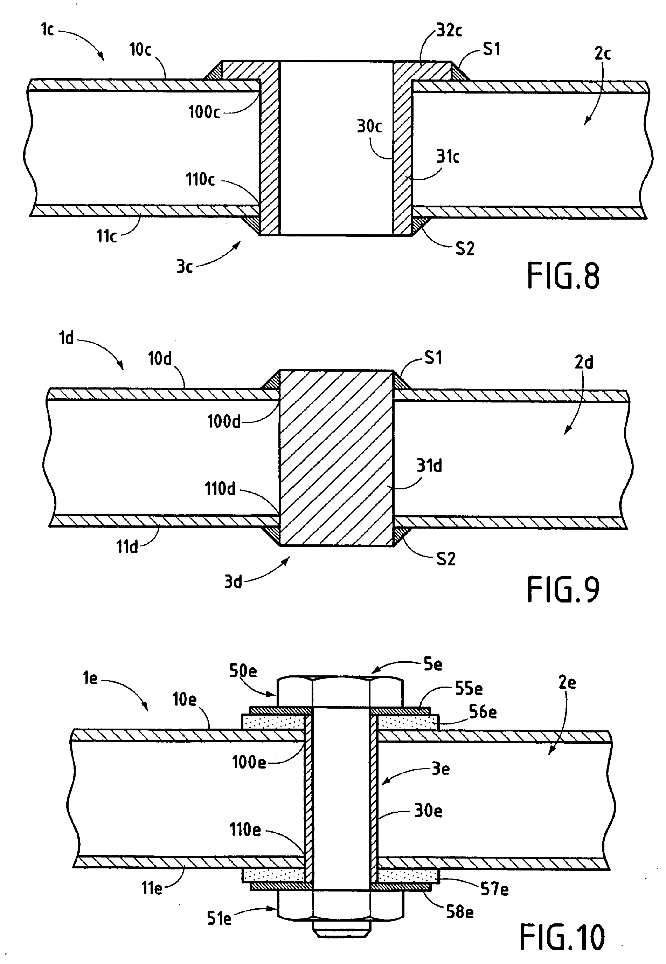

On va maintenant décrire trois exemples de structures de conteneur spécialement adaptées à l'utilisation de métal, par référence aux figures 8 à 10. Ces structures conservent toutefois la caractéristique principale de l'invention qui vient d'être rappelée.

La figure 8 illustre, en coupe partielle, un premier exemple de réalisation d'un conteneur 1c réalisé à base d'un matériau métallique.

On a supposé que le conteneur 1c avait une structure similaire à celle représentée sur la figure 2B, c'est-à-dire celle d'un parallélépipède rectangle comportant deux parois principales, 10c et 11c, sensiblement planes et parallèles entre elles. En réalité, comme il a été indiqué, ces parois ne sont qu'une subdivision artificielle, utile à des fins de description, d'une seule paroi délimitant une enceinte intérieure fermée 2c.

Dans l'exemple de réalisation de la figure 8, les puits sont constitués de tubes 3c, que l'on supposera arbitrairement disposés verticalement et comportant une collerette horizontale 32c (supérieure dans l'exemple décrit). Les tubes comportent une paroi cylindrique 31c, entourant une zone centrale creuse 30c, également cylindrique. Les tubes 3c sont enfilés dans des orifices cylindriques, 100c et 110c, réalisés dans les parois supérieure, 10c, et inférieure, 11c, du conteneur 1c. Le diamètre de ces orifices, 100c et 110c, est égal ou légèrement supérieur au diamètre extérieur de la paroi 31c des tubes 3c.

La fixation des tubes 3c est assurée par soudage sur les faces extérieures des parois, 10c et 11c, des extrémités supérieure et inférieure des tubes 1c, plus précisément par l'intermédiaire de filets périphériques circulaires de soudure, S1 et S2, respectivement. Le filet de soudure S1 entoure la collerette 32c qui repose par sa face inférieure sur la face supérieure de la paroi 10c. Le corps du tube 3c (paroi 31c) est légèrement plus long que la distance séparant les faces supérieure et intérieure des parois 10c et 11c, respectivement. Le filet de soudure S2 entoure l'extrémité inférieure du tube 1c dépassant la paroi 11c.

L'étanchéité est également obtenue par les filets de soudures continus, S1 et S2.

On constate donc que les tubes 1c joue un rôle tout à fait similaire aux arbres des figures précédentes. Ils assurent la continuité entre les deux parois, supérieure 10c et inférieure 11c, et assurent également une reprise d'effort. L'effet de "clip" ou pince explicité en regard de la figure 2A est assuré par la collerette supérieure 32c, d'une part, et le filet de soudure S2, d'autre part, qui forme lui-même une collerette.

Dans une variante, non représentée de ce mode de réalisation, on munit l'extrémité inférieure de la paroi 31c du tube 3c de pattes rabattables (une fois le tube 1c inséré dans son logement : trous 100c et 110c), ce qui a pour effet de renforcer l'effet de "clip" ou pince précité.

Les métaux utilisés doivent permettre une opération de soudure. On peut utiliser, par exemple, de la tôle d'acier pour les parois du conteneur et des tronçons de tube en acier pour former les puits.

La figure 9 illustre, en coupe partielle, une deuxième variante de réalisation de conteneur métallique, référencé 1d.

Selon cette variante, les parois supérieure 10d et inférieure 11d, sont liées par des axes 3d à corps pleins 31d. Ces axes 3d jouent un rôle tout à fait similaire aux arbres pleins des figures 4A à 6. Pour ce faire, on prévoit, comme précédemment, pour chaque arbre 3d, deux orifices, 100c et 110d, dans les parois respectives, 10d et 11d. Ces parois, 10d et 11d, délimitent une enceinte intérieure fermée 2d. Les axes 31d sont enfilés dans ces orifices, 100d et 110d. La longueur des axes 3d est telle qu'ils dépassent légèrement des deux côtés du conteneur 1d. De ce fait, ils peuvent être soudés par les extrémités supérieures et inférieures des parois 31d sur les faces externes des parois 10d et 11d, à l'aide de filets de soudures périphériques, S1 et S2, respectivement.

Comme précédemment, les filets de soudure S1 et S2, formant collerettes, fixent les axes 3d aux parois, 10d et 11d, et assurent simultanément une bonne étanchéité.

Les matériaux des différents composants peuvent être les mêmes que ceux utilisés pour le dispositif de la figure 8. Ils doivent permettre des opérations de soudure.

La figure 10 illustre, en coupe partielle, une troisième variante de réalisation d'un conteneur métallique, ici référencé 1e. Il comprend, comme précédemment deux parois principales, une paroi supérieure 10e et une paroi inférieure 11e, délimitant une enceinte intérieure fermée 2e. on a également percé des orifices en vis-à-vis, 100e et 110e, sur les parois 10e et 11e, respectivement.

Selon cette variante les puits sont constitués de simples tubes 3e à parois cylindriques 30e, formant entretoises. La fixation de ces tubes 3e est obtenue par un montage mécanique similaire à celui de la variante décrite en regard de la figure 2F. On a enfilé dans les tubes des organes de vissage 5e, du type à vis et écrous, 50e et 51e, disposés de part et d'autre des tubes 3e. Le serrage et l'étanchéité sont ont obtenus à l'aide de joints d'étanchéité, supérieur 56e et inférieur 57e, ainsi que de rondelles, supérieure 55e et inférieure 58e. cette disposition permet bien d'assurer l'effet de "clip" recherché. Elle permet également d'obtenir une précontrainte, puisque l'organe vis-écrou 5e joue le rôle de fixation et d'organe de précontrainte.

La variante qui vient d'être décrite permet d'utiliser des matériaux métalliques non soudables, par exemple des métaux à haute résilience.

A la lecture de ce qui précède, on constate aisément que l'invention atteint bien les buts qu'elle s'est fixés.

Elle permet tout à la fois de diminuer le poids du conteneur, notamment si l'on utilise un matériau composite (typiquement dans un rapport de quatre à cinq), et d'obtenir des formes variées, adaptées à des applications diverses, ce qui permet de diminuer l'encombrement. L'absence de cloisons et des parois moins épaisses assurent en outre un plus grand volume utile, pour des dimensions extérieures données.

A ce sujet, il doit être clair aussi que, bien que particulièrement adaptée à la réalisation de réservoirs destinés à contenir du gaz de pétrole liquéfié ou "GPL" , on ne saurait cantonner l'invention à ce seul type d'application. Comme il a été indiqué, elle trouve aussi application en aéronautique et, de façon plus générale, elle s'applique à la réalisation de réservoirs ou de conteneurs, notamment soumis à des pressions internes moyennes ou élevées. On peut citer, de façon non exhaustive, la réalisation de réservoirs de réacteur de climatisation, d'enceintes d'accumulateur, de bouteilles de gaz liquéfié à usage domestique pour les appareils de chauffage ou de cuisson, de bouteilles de plongée sous-marine (notamment de forme plate) ou de réservoirs hydrauliques.

Il doit être clair enfin que l'invention n'est pas limitée aux seuls exemples de réalisations explicitement décrits, notamment en relation avec les figures 1 à 10. En particulier, le nombre de puits (premier mode de réalisation) ou de piliers ou ponts de reprise (second mode de réalisation) dépend essentiellement de l'application particulière envisagée, des dimensions du conteneur et de la pression interne. Il en est de même de la nature des matériaux composites utilisés.

## Revendications

1. Conteneur comportant une paroi délimitant une enceinte interne (2) destinée à recevoir un fluide sous pression, suivant lequel ladite paroi comporte au moins une paire de première (10, 10') et deuxième (11, 11') faces en vis-à-vis, des arbres (3, 7) étant prévu dans ladite enceinte (2), qui relient chacun, de façon étanche et continue, une zone de la paroi comprise dans ladite première face à une zone de la paroi comprise dans ladite deuxième face, lesdits arbres étant réalisés dans le même matériau que lesdites parois, **caractérisé en ce que** chacun desdits arbres (3) est percé d'un orifice axial (30) débouchant (300, 301) de part et d'autre du conteneur (1, 1'), sur lesdites première (10, 10') et deuxième (11, 11') faces en vis-à-vis de ladite paroi, et **en ce qu'**il est prévu des organes de précontrainte (5, 5', 5") enfilés dans lesdits orifices axiaux (30) de manière à exercer une force de compression de part et d'autre du conteneur (1, 1'), tendant à maintenir lesdites première (10, 10') et deuxième (11, 11') faces à distance constante l'une de l'autre.

2. Conteneur selon la revendication 1, **caractérisé en ce que**, ladite paroi comprend plusieurs paires de première et deuxième faces en vis-à-vis, et **en ce qu'**il est prévu, pour chacune desdites paires, au moins un desdits arbres (3, 7) pour lier de façon continue et étanche, obtenue en une opération unique de moulage d'un même matériau, une zone intérieure de la paroi comprise dans ladite première face à une zone intérieure de la paroi comprise dans ladite deuxième face de cette paire, lesdites zones étant avantageusement planes et parallèles.

3. Conteneur selon la revendication 1 ou 2, **caractérisé en ce qu'**il comporte des premier (40) et second (41) réseaux de nervures superficielles creusées sur la face externe de ladite paroi, les nervures des premier et second réseaux se croisant à angle droit à l'embouchure (300, 301) desdits orifices axiaux (30).

4. Conteneur selon l'une des revendication 1 à 3, **caractérisé en ce que** lesdits organes de précontrainte sont constitués par un système à vis (5, 5') enserrant lesdites première (10, 10' ) et deuxième (11, 11.') faces de manière à exercer ladite force de compression.

5. Conteneur selon l'une des revendications 1 à 4, **caractérisé en ce que** lesdits organes de précontrainte (5") comprennent des rondelles (54, 55) percées d'une pluralité d'orifices (540, 550), disposées de part et d'autre du conteneur (1) et des fils tendus (56), enfilés dans lesdits orifices (540, 550) et exerçant une force de rappel desdites rondelles (54, 55) de manière à les rapprocher l'une vers l'autre et exercer ladite force de compression.

6. Conteneur selon l'une quelconque des revendications 1 à 5, **caractérisé en ce que** l'enceinte du conteneur (6') est subdivisée en une enceinte principale (8) comprenant au moins l'un desdits arbres (7), et une enceinte secondaire (8') séparée de l'enceinte principale par une cloison continue (7'), **en ce que** l'enceinte principale (8) contient ledit fluide sous pression, **en ce que** ladite cloison (7') est munie d'un opercule (77) calibré à une valeur prédéterminée de pression différentielle entre l'enceinte principale (8) et l'enceinte secondaire (8') de manière à laisser le fluide pénétrer dans l'enceinte secondaire (8') en cas de surpression dépassant ledit seuil, et **en ce que** l'enceinte secondaire (8') contient un matériau gélifiant (78) destiné à solidifier le fluide.

7. Conteneur selon l'une quelconque des revendications précédentes, **caractérisé en ce que** ladite paroi et lesdits arbres sont en matériau composite et réalisés, de manière à obtenir une continuité étanche entre lesdites faces en vis-à-vis, en une opération unique de moulage autour d'une vessie gonflable formant des puits de réception desdits arbres.

8. Conteneur selon l'une quelconque des revendications précédentes réalisé sous une forme adaptée à constituer un réservoir de gaz de pétrole liquéfié se logeant dans un véhicule.

9. Procédé de fabrication d'un conteneur selon l'une quelconque des revendications 1 à 8 par mise en oeuvre d'un matériau composite à l'aide d'un moule en deux parties aux dimensions extérieures du conteneur, comprenant les étapes suivantes :
- une étape de création d'une vessie gonflable (20) en matériau élastomère, ladite vessie (20) ayant substantiellement la forme de l'enceinte interne dudit conteneur (1, 1', 6) à fabriquer et des dimensions très peu inférieures aux dimensions de cette enceinte, ladite vessie (20) comportant en outre des puits, reliant des, faces en vis-à-vis, destinés à recevoir lesdits arbres (3, 7) ;
- une étape de recouvrement de la paroi externe de ladite vessie (20) ainsi que de remplissage desdits puits (200) par une association déterminée de matériaux de base sous forme malléable, destinés à constituer ladite paroi en matériau composite après durcissement ;
- une étape d'introduction de cet ensemble dans ledit moule en deux parties et de gonflage de ladite vessie (20), de manière à plaquer lesdits matériaux de base contre les parois internes du moule ;
- et une étape de durcissement desdits matériaux de base en un matériau composite définitif constituant ladite paroi (10-15, 60-54) et lesdits arbres (3, 7).

## Claims

1. Container comprising a wall delimiting an internal enclosure (2, 8) intended to receive a fluid under pressure, wherein said wall comprises at least a pair of first (10, 10') and second (11, 11') opposite faces, shafts (3, 7) being provided in said enclosure (2), each connecting, tightly and continuously, a portion of the wall included in said first face to a portion of the wall included in said second face, said shafts being made of the same material as said walls, **characterized in that** each of said shafts (3) is pierced by an axial aperture (30) opened (300,301) on each side of the container (1,1'), on said first (10, 10') and second (11, 11') opposite faces of said wall, and **in that** prestressing means (5,5',5") are provided laying along said axial apertures so that they exert a force of pressure on each side of the container (1,1'), leading to maintain said first (10, 10') and second (11, 11') faces at constant distance one from the other.

2. Container according to claim 1, **characterized in that**, said wall includes several pairs of first and second opposite faces, and **in that** is provided, for each one of the said pairs, at least one of the said shafts (3, 7) to connect tightly and continuously, made in a single moulding operation of a same material, an interior portion of the wall included in said first face to an interior portion of the wall in said second face of this pair, said portions being advantageously plane and parallel.

3. Container according to claim 1 or 2, **characterized in that** it comprises first (40) and second (41) networks of surface ribs dug in the external face of said wall, ribs of the first and second networks crossing at right angle at the openings (300, 301) of said axial apertures (30).

4. Container according to one of the claims 1 to 3, **characterized in that** said prestressing means are made of screw means (5,5') clasping said first (10, 10') and second (11, 11') faces so as to exert said force of pressure.

5. Container according to one of the claims 1 to 4, **characterized in that** said prestressing means include washers (54, 55) bored of a plurality of openings (540, 550), laid out on both sides of the container (1) and stretched wires (56) passing through said openings (540, 550) and exerting a resorting force for said washers (54, 55) so as to bring them closer one towards the other and to exert the said compressive force.

6. Container according to any of the preceding claims, **characterized in that** the enclosure of the container (6') is subdivided in a principal enclosure (8) including at least one of said shafts (7), and a secondary enclosure (8') separated from the principal enclosure by a continuous partition (7'), **in that** the principal enclosure (8) contains said fluid under pressure, **in that** said partition (7') is provided with a cap (77) gauged with a predetermined value of differential pressure between the principal enclosure (8) and the secondary enclosure (8') so as to let the fluid penetrate in the secondary enclosure (8') in the event of overpressure exceeding the aforementioned threshold, and **in that** the secondary enclosure (8') contains a gelatinizing material (78) intended to solidify the fluid.

7. Container according to any of the preceding claims, **characterized in that** said wall and said shafts are made of composite material and manufactured, in order to achieve a tight continuity between said opposite faces, in a single moulding operation around an inflatable bladder taking the shape of receipting wells for said shafts.

8. Container according to any of the preceding claims, manufactured in a shape adapted to form a liquefied petroleum gas tank to be housed in a vehicle.

9. Manufacturing method for a container according to any of the claims 1 to 8 using a composite material with help of a mould in two parts having the external dimensions of the container, including the following steps:
- a step for creation of an inflatable bladder (20) out of an elastomer material, said bladder (20) substantially having the shape of the internal enclosure of said container (1,1',6) to manufacture and dimensions hardly lower than dimensions of this enclosure, said bladder (20) further including wells, connecting opposite faces, intended to receive said shafts (3,7);
- a step for covering of the external wall of said bladder (20) as well as filling of said wells (200) with given association of basic materials in malleable form, intended to constitute said composite material wall after hardening;
- a step of introduction of this assembly into the aforementioned mould in two parts and of inflation of said bladder (20), so as to press said basic materials against the internal walls of the mould;
- and a step of hardening of said basic materials into a final composite material constitutive of said wall (10-15, 60-64) and of said shafts (3, 7).

## Patentansprüche

1. Behälter mit einer Wand, die eine zur Aufnahme eines Druckfluids bestimmte innere Kammer (2) begrenzt, wobei diese Wand mindestens ein aus einer ersten (10, 10') und einer zweiten (11, 11') Seite bestehendes Paar von einander gegenüberliegenden Seiten umfasst, wobei in der Kammer (2) Spindeln (3, 7) vorgesehen sind, die jeweils eine Zone der in der ersten Seite enthaltenen Wand dicht und kontinuierlich mit einer Zone der in der zweiten Seite enthaltenen Wand verbinden, wobei diese Spindeln aus demselben Werkstoff wie die Wände hergestellt sind, **dadurch gekennzeichnet, dass** jede der Spindeln (3) mit einer axialen Öffnung (30) versehen ist, die zu beiden Seiten des Behälters (1, 1') auf der ersten (10, 10') und der zweiten (11, 11') der einander gegenüberliegenden Seiten der Wand ausmündet (300, 301), und dass Vorspannungsorgane (5, 5', 5") vorgesehen sind, die in die axialen Öffnungen (30) eingesteckt sind, so dass zu beiden Seiten des Behälters (1, 1') eine Kompressionskraft ausgeübt wird, die bestrebt ist, die erste (10, 10') und die zweite (11, 11') Seite in einem konstanten Abstand voneinander zu halten.

2. Behälter nach Anspruch 1, **dadurch gekennzeichnet, dass** die Wand mehrere aus einer ersten und einer zweiten Seite bestehende Paare von einander gegenüberliegenden Seiten umfasst und dass bei jedem der Paare mindestens eine der Spindeln (3, 7) vorgesehen ist, um auf eine kontinuierliche und dichte Weise, die in einem einzigen Arbeitsgang der Formung ein und desselben Werkstoffs erhalten wird, eine innere Zone der in der ersten Seite enthaltenen Wand mit einer inneren Zone der in der zweiten Seite dieses Paars enthaltenen Wand zu verbinden, wobei diese Zonen vorteilhafter Weise eben und parallel sind.

3. Behälter nach Anspruch 1 oder 2, **dadurch gekennzeichnet, dass** er ein erstes (40) und ein zweites (41) Netz von auf der Außenseite der Wand ausgehöhlten oberflächlichen Rippen umfasst, wobei die Rippen des ersten und des zweiten Netzes sich rechtwinklig an der Mündung (300, 301) der axialen Öffnungen (30) kreuzen.

4. Behälter nach einem der Ansprüche 1 bis 3, **dadurch gekennzeichnet, dass** die Vorspannungsorgane aus einem System von Schrauben (5, 5') bestehen, die die erste (10, 10') und die zweite (11, 11') Seite so einspannen, dass diese Kompressionskraft ausgeübt wird.

5. Behälter nach einem der Ansprüche 1 bis 4, **dadurch gekennzeichnet, dass** die Vorspannungsorgane (5") Scheiben (54, 55), die mit einer Vielzahl von Löchern (540, 550) versehen sind und zu beiden Seiten des Behälters (1) angeordnet sind, und gespannte Drähte (56) umfassen, die in die Löcher (540, 550) eingefädelt sind und eine Kraft der Rückholung der Scheiben (54, 55) ausüben, so dass diese einander angenähert werden und diese Kompressionskraft ausgeübt wird.

6. Behälter nach einem der Ansprüche 1 bis 5, **dadurch gekennzeichnet, dass** die Kammer des Behälters (6') in eine Hauptkammer (8), die mindestens eine der Spindeln (7) umfasst, und eine Nebenkammer (8') unterteilt ist, die von der Hauptkammer durch eine durchgehende Trennwand (7') getrennt ist, dass die Hauptkammer (8) das Druckfluid enthält, dass die Trennwand (7') mit einem Deckel (77) versehen ist, der auf einen vorbestimmten Wert der Druckdifferenz zwischen der Hauptkammer (8) und der Nebenkammer (8') kalibriert ist, so dass das Fluid im Fall eines Überdrucks, der diese Schwelle überschreitet, in die Nebenkammer (8') eintreten gelassen wird, und dass die Nebenkammer (8') ein gelierendes Material (78) enthält, das dazu bestimmt ist, das Fluid zu verfestigen.

7. Behälter nach einem der vorhergehenden Ansprüche, **dadurch gekennzeichnet, dass** die Wand und die Spindeln aus einem Verbundwerkstoff bestehen und so hergestellt sind, dass eine dichte Kontinuität zwischen den einander gegenüberliegenden Seiten in einem einzigen Arbeitsgang der Formung um eine aufblasbare Blase herum, die Schächte zur Aufnahme der Spindeln bildet, erhalten wird.

8. Behälter nach einem der vorhergehenden Ansprüche, der in einer Form ausgeführt ist, die dafür ausgelegt ist, einen in einem Fahrzeug untergebrachten Flüssiggasbehälter zu bilden.

9. Verfahren zur Herstellung eines Behälters nach einem der Ansprüche 1 bis 8 durch Verwendung eines Verbundwerkstoffs mit Hilfe einer zweiteiligen Form mit den Außenabmessungen des Behälters, umfassend die folgenden Schritte:
- einen Schritt der Erzeugung einer aufblasbaren Blase (20) aus Elastomer, wobei diese Blase (20) im Wesentlichen die Form der inneren Kammer des herzustellendes Behälters (1, 1', 6) und Abmessungen besitzt, die sehr wenig kleiner als die Abmessungen dieser Kammer sind, wobei die Blase (20) außerdem Schächte besitzt, die einander gegenüberliegende Seiten verbinden und dazu bestimmt sind, die Spindeln (3, 7) aufzunehmen;
- einen Schritt des Bedeckens der Außenwand der Blase (20) sowie der Füllung der Schächte (200) mit einer bestimmten Kombination von Basiswerkstoffen in formbarer Form, die dazu bestimmt sind, nach Härtung die Wand aus Verbundwerkstoff zu bilden;
- einen Schritt der Einführung dieser Einheit in die zweiteilige Form und des Aufblasens der Blase (20), so dass die Basiswerkstoffe an die Innenwände der Form angedrückt werden;
- und einen Schritt des Aushärtens der Basiswerkstoffe zu einem endgültigen Verbundwerkstoff, der die Wand (10-15, 60-54) und die Spindeln (3, 7) bildet.
